(19) Europäisches Patentamt
European Patent Office
Office européen des brevets

(11) Veröffentlichungsnummer : **0 010 521**
**B1**

(12) **EUROPÄISCHE PATENTSCHRIFT**

(45) Veröffentlichungstag der Patentschrift : **11.08.82**

(51) Int. Cl.³ : **C 08 G 69/26**

(21) Anmeldenummer : **79810126.7**

(22) Anmeldetag : **12.10.79**

(54) **Transparentes Copolyamid und seine Verwendung zur Herstellung von Formkörpern.**

(30) Priorität : **18.10.78 CH 10772/78**

(43) Veröffentlichungstag der Anmeldung : **30.04.80 (Patentblatt 80/09)**

(45) Bekanntmachung des Hinweises auf die Patenterteilung : **11.08.82 Patentblatt 82/32**

(84) Benannte Vertragsstaaten : **CH DE FR GB IT NL**

(56) Entgegenhaltungen :
**CH A 498 893**
**DE A 2 715 860**
**FR A 2 324 672**
**GB A 1 410 007**

(73) Patentinhaber : **CIBA-GEIGY AG**
**Patentabteilung Postfach**
**CH-4002 Basel (CH)**

(72) Erfinder : **Pfeifer, Josef, Dr.**
**Brunnmattstrasse 32**
**CH-4106 Therwil (CH)**
Erfinder : **Reinehr, Dieter, Dr.**
**Wolfsheule 10**
**D-7842 Kandern (DE)**

**EP 0 010 521 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Transparentes Copolyamide und seine Verwendung zur Herstellung von Formkörpern

Gegenstand vorliegender Erfindung sind neue transparente Copolyamide sowie deren Verwendung zur Herstellung von Formkörpern.

In der U.S. Patentschrift 3.597.400 sind transparente Copolyamide aus 4,4'-Diaminodicyclohexylmethan, Hexamethylendiamin, Isophthalsäure und Terephthalsäure beschrieben. Diese Copolyamide nehmen sehr viel Wasser auf und ihre Glasumwandlungstemperaturen sinken nach Wasserlagerung beträchtlich ab. Die U.S. Patentschrift 2.696.482 beschreibt transparente Polyamide aus 4,4'-Diaminodicyclohexylmethan und Isophthalsäure. Diese Polyamide weisen eine sehr hohe Schmelzviskosität und eine hohe Wasseraufnahme auf und lassen sich nur schwer in die Schmelze kondensieren oder aus der Schmelze verarbeiten. Will man diesen Systemen Copolyamide mit hohen Glasumwandlungstemperaturen erreichen, so erhält man spröde Produkte mit relativ hoher Wasseraufnahme.

Ferner offenbaren sowohl die DE-OS 2 642 244 als auch die CH-A-498 893 Lehren zur Herstellung von transparenten, kochbeständigen Copolyamiden. Diese Lehren führen jedoch in entgegengesetzte Richtungen. Einerseits offenbart die CH-A-498 893 Poly- und Copolyamide aus aromatischen Dicarbonsäuren und gegebenenfalls Caprolactam und aus einem mindestens einmal endverzweigten aliphatischen Diamin. Die Kette des Diamins, welche mit einem Phenylenring unterbrochen sein kann, enthält 3-12 C-Atome. Andererseits lehrt die DE-OS 2 642 244, dass man zu Copolyamiden mit den erwähnten Eigenschaften gelangt, wenn man aromatische Dicarbonsäuren mit einem 4,4'-Diaminodicyclohexylalkan, einem aliphatischen Diamin mit mindestens 6 C-Atomen, sowie einer langkettigen aliphatischen Carbonsäure in Form von Aminosäure bzw. ihrem Lactam mit mehr als 9 Methylengruppen oder in Form von Dicarbonsäure mit mindestens 6 Methylengruppen zur Reaktion bringt. Das aliphatische Diamin kann dabei verzweigt oder unverzweigt sein.

Es war daher nicht vorauszusehen, dass man durch Umsetzung von aromatischen Dicarbonsäuren, die frei von aliphatischen Anteilen sind, mit einem cycloaliphatischen Diamin und einem langkettigen endverzweigten aliphatischen Diamin zu den transparenten kochbeständigen Copolyamiden der vorliegenden Erfindung gelangt, die von den zuvor genannten Nachteilen frei sind.

Die erfindungsgemässen transparenten Copolyamide weisen eine reduzierte spezifische Viskosität von mindestens 0,5 dl/g und bevorzugt von etwa 0,7 bis etwa 2,5 und insbesondere von etwa 0,8 bis etwa 1,8 dl/g, gemessen an einer 0,5 %igen Lösung in m-Kresol bei 25 °C (im folgenden auch reduzierte Lösungsviskosität genannt) auf und werden durch Umsetzung eines Gemisches A) aus im wesentlichen stöchiometrischen Mengen eines Diamins der Formel I

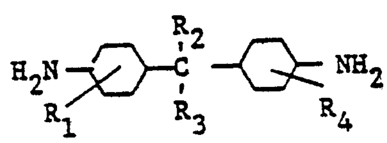

(I)

und Isophthalsäure, Terephthalsäure amidbildenden Derivaten davon oder einem Gemisch von Isophthalsäure und Terephthalsäure bzw. amidbildenden Derivaten davon entweder mit einem Gemisch B) aus im wesentlichen stöchiometrischen Mengen eines Diamins der Formel II

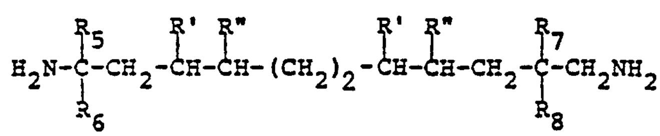

(II)

und Terephthalsäure bzw. einem amidbildenden Derivat davon oder einem Gemisch von Terephthalsäure und Isophthalsäure bzw. amidbildenden Derivaten davon in einem Molverhältnis Terephthalsäure (derivat) : Isophthalsäure (derivat) von 8 : 2 bis 10 : 0

oder mit einem Gemisch C) aus im wesentlichen stöchiometrischen Mengen eines Diamins der Formel III

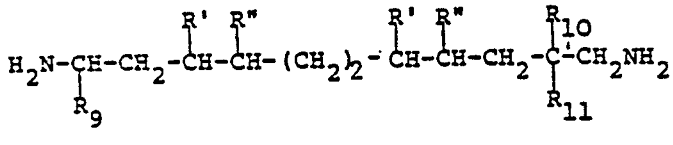

(III)

und Terephthalsäure oder Isophthalsäure bzw. Gemischen oder amidbildenden Derivaten davon erhalten, worin

R' und R" unabhängig voneinander Wasserstoff oder Methyl,

$R_1$ bis $R_4$ unabhängig voneinander Wasserstoff oder Alkyl mit 1-4 C-Atomen,

$R_5$ Alkyl mit 1-12 C-Atomen oder gegebenenfalls substituiertes Aryl,
$R_6$ Wasserstoff oder Alkyl mit 1-6 C-Atomen oder
$R_5$ und $R_6$ zusammen Alkylen mit 4-7 C-Atomen,
$R_7$ Alkyl mit 1-8 C-Atomen,
$R_8$ Wasserstoff oder Alkyl mit 1-5 C-Atomen,
$R_9$ gegebenenfalls durch $C_{1-4}$-Alkyl substituiertes Cycloalkyl mit 5-12 Ring-C-Atomen,
$R_{10}$ Wasserstoff oder Methyl und $R_{11}$ Methyl oder $R_{10}$ und
$R_{11}$ zusammen Alkylen mit 4-11 C-Atomen bedeuten, wobei der Anteil an Gemisch C) 60-80 Gewichtsprozent und der Anteil an Gemisch B) 50-80 Gewichtsprozent betragen, mit der Massgabe, dass bei einem Anteil an Gemisch B) von bis zu 65 Gewichtsprozent höchstens 70 Mol.% der Isophthalsäure oder eines amidbildenden Derivats davon im Gemisch A) durch Terephthalsäure oder ein amidbildendes Derivat davon ersetzt sein können, und sich diese Gewichtsprozente bei amidbildenden Derivaten der Isophthalsäure oder Terephthalsäure auf gleiche funktionelle Gruppen beziehen.

Die erfindungsgemässen Copolyamide zeichnen sich durch hohe Glasumwandlungstemperaturen und dementsprechend hohe Wärmeformbeständigkeit, gute thermoplastische Verarbeitbarkeit, geringe Wasseraufnahme verbunden mit verminderter Abhängigkeit der mechanischen und elektrischen Eigenschaften von der Umgebungsfeuchtigkeit und verbesserte Hydrolysebeständigkeit aus. Die neuen Copolyamide behalten auch in wassergesättigtem Zustand hohe Erweichungstemperaturen bei und sind beständig gegen kochendes Wasser.

Bevorzugt steht eines von R' und R" für Wassertosff. Besonders bevorzugt stellen sowol R' als auch R" Wasserstoff dar.

Durch $R_1$ bis $R_8$ dargestellte Alkylgruppen können geradkettig oder verzweigt sein. Bedeutet $R_9$ ein durch $C_{1-4}$-Alkyl substituiertes Cycloalkyl, so kann dieser Alkylsubstituent ebenfalls geradkettig oder verzweigt sein. Beispiele derartiger Alkylgruppen sind : die Methyl-, Aethyl-, n-Propyl-, Isopropyl-, n-, sek- und tert-Butyl-, n-Pentyl-, 2- oder 3-Pentyl-, n-Hexyl-, 2- oder 3-Heptyl-, n-Octyl-, n-Decyl- und n-Dodecylgruppe.

Alkylgruppen $R_1$ bis $R_4$ sind bevorzugt geradkettig und weisen 1 oder 2 C-Atome auf. Besonders bevorzugt stellen $R_2$ und $R_3$ je Wasserstoff dar, und $R_1$ bis $R_4$ bedeuten je Methyl.

Stellt $R_5$ gegebenenfalls substituiertes Aryl dar, so kommen als Substituenten insbesondere Alkygruppen mit 1-4 C-Atomen und insbesondere mit 1 oder 2 C-Atomen in Betracht. Arylgruppen $R_5$ können mehrere Alkylgruppen tragen, sind aber bevorzugt nur durch eine Alkylgruppe substituiert.

Besonders bevorzugt stellt $R_5$ als gegebenenfalls substituiertes Aryl eine unsubstituierte 1- oder 2-Naphtylgruppe oder eine Phenylgruppe dar, welche durch eine $C_{1-4}$-Alkylgruppe, insbesondere durch eine $C_{1-2}$-Alkylgruppe, substituiert ist.

Ganz besonders bevorzugt stellt $R_5$ ein unsubstituiertes Phenyl dar.

Bedeutet $R_5$ eine definitionsgemässe Alkylgruppe, so handelt es sich vor allem um geradkettiges Alkyl mit 1-6 C-Atomen oder um Reste $—CH(R_{12})(R_{13})$, worin $R_{12}$ Alkyl mit 1-4 und $R_{13}$ Alkyl mit 1-6 C-Atomen darstellen. Die genannten Alkylgruppen $R_{12}$ und $R_{13}$ sind bevorzugt geradkettig und stellen insbesondere Methyl, Aethyl, n-Propyl oder n-Butyl dar.

Durch $R_5$ und $R_6$ und/oder $R_{10}$ und $R_{11}$ gebildete Alkylengruppen sind mit Vorteil geradkettig. Stellen $R_5$ und $R_6$ zusammen eine Alkylengruppe dar, so handelt es sich vor allem um die Tetramethylen- und besonders um die Pentamethylengruppe. Durch $R_{10}$ und $R_{11}$ zusammen gebildete Alkylengruppen weisen bevorzugt 4-7 C-Atome auf. Insbesondere handelt es sich dabei um die Tetramethylen-, die Heptamethylen- und ganz besonders um die Pentamethylengruppe.

Alkylgruppen $R_7$ und $R_8$ sind mit Vorteil geradkettig und weisen 1-6 bzw. 1-4 C-Atome auf. Besonders bevorzugt stellen $R_7$ und $R_8$ unabhängig voneinander Methyl, Aethyl, n-Propyl oder n-Butyl dar.

Sind Cycloalkylgruppen $R_9$ durch Alkylgruppen substituiert, so handelt es sich dabei vor allem um durch eine Methyl- oder Aethylgruppe substituiertes Cycloalkyl. Bevorzugt sind Cycloalkylgruppen $R_9$ jedoch unsubstituiert und weisen 5-8 Ring-C-Atome auf. Besonders bevorzugt stellt $R_9$ die Cyclopentyl- und vor allem die Cyclohexylgruppe dar.

Bevorzugt sind erfindungsgemässe Copolyamide, die durch Umsetzen eines Gemisches A) aus stöchiometrischen Mengen eines Diamins der Formel I und Isophthalsäure, Terephthalsäure oder einem Gemisch von Isophthalsäure und Terephthalsäure bzw. amidbildenden Derivaten davon mit einem Gemisch B) aus stöchiometrischen Mengen eines Diamins der Formel II und Terephthalsäure bzw. einem amidbildenden Derivat davon erhalten werden, wobei R' und R" je Wasserstoff, $R_1$-$R_4$ unabhängig voneinander Wasserstoff oder Methyl, $R_5$ Phenyl, geradkettiges Alkyl mit 1-6 C-Atomen oder $—CH(R_{12})(R_{13})$, $R_6$ Wasserstoff oder methyl, $R_7$ und $R_{13}$ unabhängig voneinander Alkyl mit 1-6 C-Atomen und $R_8$ und $R_{12}$ unabhängig voneinander Alkyl mit 1-4 C-Atomen bedeuten, der Anteil an Gemisch B) 50-75 Gewichtsprozent beträgt und sich diese Gewichtsprozente bei amidbildenden Derivaten der Iso- oder Terephthalsäure auf gleiche funktionelle Gruppen beziehen besonders Copolyamide der oben erwähnten Art, worin R' und R" je Wasserstoff, $R_1$ und $R_4$ je Methyl, $R_2$ und $R_3$ je Wasserstoff, $R_6$ Wasserstoff, $R_5$ $—CH(R_{12})(R_{13})$, und $R_7$ und $R_{13}$ bzw. $R_8$ und $R_{12}$ je Methyl, Aethyl, n-propyl oder n-Butyl bedeuten und der Anteil an Gemisch B) 50-70 Gewichtsprozent beträgt.

Weitere bevorzugte Copolyamide sind solche, die durch Umsetzen eines Gemisches A) aus stöchiometrischen Mengen eines Diamins der Formel I und Isophthalsäure bzw. einem amidbildenden

Derivat davon mit einem Gemisch C) aus stöchiometrischen Mengen eines Diamins der Formel III und Terephthalsäure bzw. einem amidbildenden Derivat davon erhalten werden, worin R' und R" je Wasserstoff, $R_1$ bis $R_4$ unabhängig voneinander Wasserstoff oder Methyl, $R_9$ Cycloalkyl mit 5-8 Ring C-Atomen und $R_{10}$ und $R_{11}$ je Methyl oder zusammen Alkylen mit 4-7 C-Atomen bedeuten, der Anteil an Gemisch C) 65-75 Gewichtsprozent beträgt und sich diese Gewichtsprozente bei amidbildenden Derivaten der Iso- oder Terephthalsäure auf gleiche funktionelle Gruppen beziehen, vor allem Copolyamide der genannten Art, worin R' und R" je Wasserstoff, $R_1$ und $R_4$ je Methyl, $R_2$ und $R_3$ je Wasserstoff, $R_9$ Cyclopentyl und $R_{10}$ und $R_{11}$ zusammen Tetramethylen oder $R_9$ Cyclohexyl und $R_{10}$ und $R_{11}$ zusammen Pentamethylen bedeuten und der Anteil an Gemisch C) 65-75 Gewichtsprozent beträgt.

Besonders bevorzugt sind Copolyamide, die durch Umsetzen eines Gemisches A) aus stöchiometrischen Mengen eines Diamins der Formel Ia

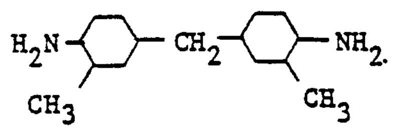

(Ia)

und Isophthalsäure, Terephthalsäure oder amidbildenden Derivaten davon oder einem Gemisch von Isophthalsäure und Terephthalsäure bzw. amidbildenden Derivaten davon in einem Molverhältnis Isophthalsäure (derivat) : Terephthalsäure (derivat) von 5 : 5 mit einem Gemisch B) aus stöchiometrischen Mengen eines Diamins der Formel IIa

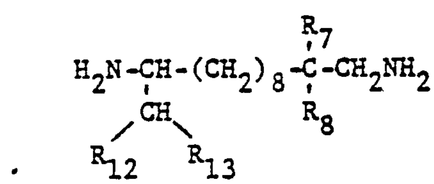

(IIa),

worin $R_7$, $R_8$, $R_{12}$ und $R_{13}$ je Methyl oder Aethyl bedeuten, und Terephthalsäure bzw. einem amidbildenden Derivat davon erhalten werden, wobei der Anteil an Gemisch B) bei $R_7$, $R_8$, $R_{12}$, $R_{13}$ = Methyl 60-75 Gewichtsprozent und bei $R_7$, $R_8$, $R_{12}$, $R_{13}$ = Aethyl 50-65 Gewichtsprozent beträgt und sich diese Gewichtsprozente bei amidbildenden Derivaten der Iso- oder Terephthalsäure auf gleiche funktionelle Gruppen beziehen.

Als amidbildende Derivate der Terephthalsäure oder Isophthalsäure können beispielsweise die entsprechenden Dihalogenide, vor allem die Dichloride, Dinitrile, Dialkyl- oder Diarylester, besonders Dialkylester mit je 1-4 C-Atomen in den Alkylteilen und Diphenylester, verwendet werden.

Die Umsetzung der definitionsgemässen Reaktionskomponenten kann nach an sich bekannten Methoden vorgenommen werden. Bevorzugt ist die Herstellung nach dem Schmelzpolykondensationsverfahren in mehreren Stufen. Dabei werden die Diamine mit stöchiometrischen Mengen definitionsgemässer Dicarbonsäuren in einem abgeschlossenen Gefäss, gegebenenfalls unter Zusatz von Wasser, unter Inertgas bei Temperaturen zwischen etwa 240 und 290 °C vorkondensiert. Unter Umständen kann es zweckmässig sein, die Diamine und die Dicarbonsäuren als Salze einzusetzen ; insbesondere ist es vorteilhaft, die Terephthalsäure in Form des Salzes zu verwenden, da sich die freie Säure ohne Wasserzusatz nur langsam im Verlaufe der Vorkondensation auflöst und zu verlängerten Reaktionszeiten führt. Bei Isophthalsäure besteht diese Schwierigkeit nicht, so dass sie ohne weiteres auch als solche, d.h. ohne Salzbildung, eingesetzt werden kann. Bevorzugt setzt man die Diamine der Formeln II und III als Salze und das Diamin der Formel I und/oder Isophthalsäure in freier Form ein. Die für die Vorkondensation einzusetzenden Salze werden aus stöchiometrischen Mengen Terephthalsäure bzw. Isophthalsäure und Diamin der Formel II oder III in einem geeigneten inerten organischen Lösungsmittel hergestellt. Als inerte organische Lösungsmittel eignen sich dabei z.B. cycloaliphatische Alkohole, wie Cyclopentanol und Cyclohexanol, und vor allem aliphatische Alkohole mit bis zu 6 C-Atomen, wie Methanol, Aethanol, n-Propanol, Butanole, Pentanole und Hexanole, sowie Gemische derartiger Lösungsmittel mit Wasser. Das Vorkondensat kann anschliessend bei Temperaturen zwischen etwa 260 und 300 °C bei Normaldruck und in Inertgasatmosphäre bis zur Bildung der erfindungsgemässen Copolyamide weiterkondensiert werden. Unter Umständen kann es von Vorteil sein, nach Beendigung der Polykondensation Vakuum anzulegen, um das Polyamid zu entgasen.

Die erfindungsgemässen Copolyamide können auch durch Schmelz- oder Lösungsmittelpolykondensation von Diaminen der Formel I, II oder III mit stöchiometrischen Mengen eines aktivierten Esters der Isophthalsäure, der Terephthalsäure oder Gemischen davon hergestellt werden. Als aktivierte Ester eignen sich insbesondere die entsprechenden Diphenylester. Die Reaktionstemperaturen liegen

dabei im allgemeinen zwischen etwa 230 und 300 °C. Diese Herstellungsmethode eignet sich insbesondere für Copolyamide, die durch Umsetzung eines Gemisches A) mit einem Gemisch B), worin $R_6 \neq H$ ist, erhalten werden.

Den erfindungsgemässen Copolyamiden können bei der Herstellung oder bei der Formgebung übliche Zusätze, wie Hitze- und Licht-Stabilisatoren, Antioxidantien, Farbstoffe, Flammschutzmittel und dergleichen, zugesetzt werden.

Die Diamine der Formel I sind bekannt oder können nach an sich bekannten Methoden hergestellt werden. Die Diamine der Formeln II und III sind neu. Die genannten Diamine können zum Beispiel dadurch hergestellt werden, dass man eine Verbindung der Formel IV

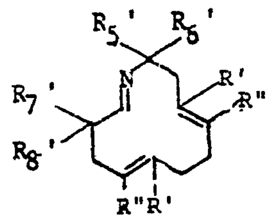

(IV)

mit einer Verbindung der Formel V

$$\left[ H_2NOH \cdot H^{\oplus} \right]_n \quad X^{\ominus n} \qquad (V)$$

zu einer Verbindung der Formel VIa

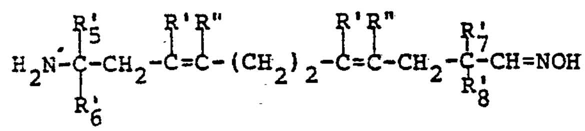

(VIa)

umsetzt oder eine Verbindung der Formel IV katalytisch zu einer Verbindung der Formel VII

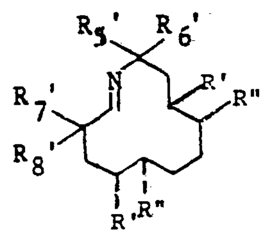

(VII)

hydriert und die Verbindung der Formel VII mit einer Verbindung der Formel V zu einer Verbindung der Formel VIb

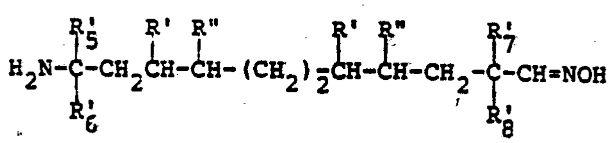

(VIb)

umsetzt. Anschliessend werden die Verbindungen der Formeln VIa und VIb katalytisch zu Diaminen der Formel II bzw. III hydriert. In den obigen Formeln IV bis VII haben R' und R" die unter Formel II bzw. III angegebene Bedeutung, $R_5'$, $R_6'$, $R_7'$ und $R_8'$ stellen gleiche Gruppen wie $R_5$, $R_6$, $R_7$ und $R_8$ dar oder $R_5'$ ist Wasserstoff, $R_6'$ ist eine Gruppe $R_9$, $R_7'$ ist eine Gruppe $R_{10}$ und $R_8'$ ist eine Gruppe $R_{11}$, wobei $R_9$, $R_{10}$ und $R_{11}$ die unter Formel III angegebene Bedeutung haben. X stellt das Anion einer anorganischen, unter den Reaktionsbedingungen nicht oxidierenden Säure, z.B. das Anion der Chlor- oder Bromwasserstoffsäure oder der Schwefelsäure, dar und n ist eine der Wertigkeit von X entsprechende ganze Zahl. Anstelle der Hydroxylaminsalze der Formel V können auch Hydrazine, wie Phenylhydrazin oder Hydrazinhydrat, Benzylamin oder Semicarbazid bzw. deren Salze mit anorganischen

Säuren eingesetzt werden. Dabei entstehen als Zwischenprodukte der Formeln VIa oder VIb die entsprechenden Hydrazone, Benzylamine oder Semicarbazone. Die Umsetzung der Verbindungen der Formel IV und VII mit der Verbindung der Formel V wird zweckmässig in wässrigem Medium und unter Zusatz einer anorganischen, unter den Reaktionsbedingungen nicht oxidierenden Säure, wie verdüunte HCl oder Schwefelsäure, vorgenommen. Die Hydrierungen werden mit Vorteil in Gegenwart geeigneter inerter organischer Lösungsmittel, wie cycloaliphatische Kohlenwasserstoffe, cyclische Aether oder Alkohole, besonders Cyclohexan, Tetrahydrofuran und Methanol, und unter Verwendung an sich bekannter Hydrierungskatalysatoren durchgeführt. Als solche eignen sich je nach Art der zu hydrierenden Verbindung Platin-, Rhodium-, Palladium-, Ruthenium-, Rhodium/Aluminiumoxid- oder Nickel-Katalysatoren.

Verbindungen der Formel III, worin $R_9$ gegebenenfalls substituiertes Cycloalkyl bedeutet, können auch durch katalytische Hydrierung der entsprechenden Diamine der Formel III mit $R_9$ = gegebenenfalls substituiertes Phenyl hergestellt werden.

Die Ausgangsprodukte der Formel V sind bekannt. Die Verbindungen der Formel IV können auf analoge Weise wie in Helv. Chim. Acta, *61*, Fasc. 3,1122-1124 (1978) beschrieben durch nickel-katalysierte Mischoligomerisation von 2-Aza-1,3-butadienen der Formel VIII

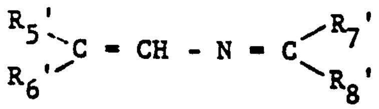

(VIII)

mit Verbindungen der Formel IX

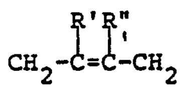

(IX)

hergestellt werden, wobei R', R'', $R_5'$, $R_6'$, $R_7'$ und $R_8'$ die oben angegebene Bedeutung haben. Geeignete Katalysatorsysteme sind z.B. in der deutschen Offenlegungsschrift 2.330.087 beschrieben. Die 2-Aza-1,3-butadiene der Formel VIII sind bekannt oder können analog den in der Literatur beschriebenen Methoden hergestellt werden [vgl. z.B. Zhurnal Organicheskoi Khimii, *6*, N° 11, 2197-99 (1970) ; Izw. Akad. Nauk SSSR, Ser. Khim., N° 9, 2038-2045 (1975) ; Tetrahedron, *34*, 833-839 (1978) ; J. Org. Chem., *43*, 782-784 (1978) ; US Patentschriften 2.319.848 und 3.706.802].

Die erfindungsgemässen Copolyamide haben ein glasklares Aussehen und hohe Glasumwandlungstemperaturen, lassen sich aber trotzdem sehr gut thermoplastisch verarbeiten, z.B. nach dem Spritzguss- oder Extrusionsverfahren. Sie zeichnen sich ferner durch geringe Wasseraufnahme, gute Hydrolysebeständigkeit, Beständigkeit gegen kochendes Wasser und geringe Beeinflussung der mechanischen und elektrischen Eigenschaften unter Feuchtigkeitseinwirkung aus.

Die erfindungsgemässen Copolyamide können nach an sich bekannten Methoden zu transparenten Formkörpern verschiedenster Art verarbeitet werden, wie transparenten Geräten und Geräteteilen.

## Beispiel 1

Herstellung von Salzen aus Terephthalsäure oder Isophthalsäure und 1,11-Diaminoundecanen der Formel II oder III

In einem Rundkolben, der mit Rührer, Rückflusskühler und Tropftrichter versehen ist, werden 0,1 Mol Terephthalsäure bzw. Isophthalsäure in 300 ml 70 %igen Aethanol zum Sieden erhitzt. In die kochende Suspension lässt man unter Rühren 0,1 Mol Diamin der Formel II oder III im Verlaufe von ca. 10 Minuten aus dem Tropftrichter einfliessen und spült darin haftende Diaminreste mit etwas Aethanol quantitativ in das Reaktionsgemisch. Die dabei entstandene klare Lösung lässt man unter ständigem Rühren erkalten, filtriert das dabei ausgefallene Salz ab und trocknet es im Vakuum bei 90 °C.

Nach dieser Methode wurden die folgenden Salze hergestellt :

| Bezeichnung | Zusammensetzung | Ausbeute (% d.Th.) |
|---|---|---|
| Salz A | 1-Aethyl-10,10-dimethyl-1,11-diamino-undecan/TPS | 86 |
| Salz B | 1-Isopropyl-10,10-dimethyl-1,11-diaminoundecan /TPS | 78 |

(Fortsetzung)

| Bezeichnung | Zusammensetzung | Ausbeute (% d.Th.) |
|---|---|---|
| Salz C | 1-Phenyl-10,10-dimethyl-1,11-diaminoundecan/TPS | 92 |
| Salz D | 1-Phenyl-10-methyl-1,11-diaminoundecan/TPS | 96 |
| Salz E | 1-Cyclohexyl-10,10-dimethyl-1,11-diaminoundecan/TPS | 89 |
| Salz F | 1-(3-Pentyl)-10,10-diäthyl-1,11-diaminoundecan/TPS | 98 |
| Salz G | 1-(2-Pentyl)-10-methyl-10-n-propyl-1,11-diaminoundecan/TPS | 96 |
| Salz H | 1,10-Diäthyl-10-n-butyl-1,11-diaminoundecan/TPS | 93 |
| Salz I | 1-(3-Heptyl)-10-äthyl-10-n-butyl-1,11-diaminoundecan /TPS | 98 |
| Salz K | 1-Cyclohexyl-10-pentamethylen-1,11-diaminoundecan/TPS | 97 |
| Salz L | 1-Cyclohexyl-10-pentamethylen-1,11-diaminoundecan/IPS | 72 |
| Salz M | 1-Cyclopentyl-10-tetramethylen-1,11-diaminoundecan/TPS | 95 |
| Salz N | 1-Phenyl-10,10 diäthyl-1,11-diaminoundecan/TPS | 88 |
| Salz O | 1-Phenyl-10-äthyl-10-n-butyl-1,11-diaminoundecan/TPS | 98 |
| Salz P | 1-(3-Pentyl)-10-methyl-1,11-diaminoundecan/TPS | 93 |
| Salz Q | 1-n-Hexyl-10,10-dimethyl-1,11-diaminoundecan/TPS | 89 |
| Salz R | 1-(3-Pentyl)-3,(4),7(8),10-trimethyl-1,11-diaminoundecan/TPS | 94 |

TPS = Terephthalsäure
IPS = Isophthalsäure

## Beispiele 2-26

In ein Bombenrohr, welches mit einem Schraubdeckel mit eingebautem Ueberdruckventil ausgestattet ist, werden folgende Komponenten eingewogen:

a) 4,4'-Diamino-3,3'-dimethyldicyclohexylmethan

b) eine diesem Diamin äquivalente Menge Isophthalsäure, eine äquivalente Menge eines Gemisches aus Iso- und Terephthalsäure oder Terephthalsäure allein

c) eines oder mehrere der in Beispiel 1 aufgeführten Salze aus einem Diamin der Formel II oder III und terephthalsäure oder Isophthalsäure.

Nachdem man die Luft im Bombenrohr vollständig durch Stickstoff oder ein anderes Inertgas verdrängt hat, verschliesst man das Bombenrohr und taucht es in ein Salzbad, dessen Temperatur 270 °C beträgt. Nach 30 bis 60 Minuten ist eine homogene, glasklare Schmelze entstanden. Nach insgesamt 3 Stunden wird die Vorkondensation abgebrochen, indem man das Bombenrohr aus dem Salzbad entfernt und den Ueberdruck durch Oeffnen des Ventils ablässt. Das erstarrte glasklare Vorkondensat wird aus dem Bombenrohr entfernt und in ein Kondensationsgefäss übergeführt. Unter strengem Ausschluss von Luft und unter dauerndem Durchleiten von Stickstoff wird die Schmelze bei 280 °C Salzbadtemperatur 5 Stunden polykondensiert, wobei das Reaktionswasser durch den Stickstoffstrom laufend entfernt wird. Beim Abkühlen erstarrt die Schmelze zu einer glasklaren Masse.

Je 2-3 g der hergestellten Copolyamide werden in einer beheizbaren hydraulischen Presse bei 270 °C zu einer Folie von ca. 0,4 bis 1 mm Dicke verpresst. Zur Bestimmung der Wasseraufnahme werden die

Folien bei Raumtemperatur (20-25 °C) einer relativen Luftfeuchtigkeit von 65 % ausgesetzt, bis sich das Gleichgewicht eingestellt hat, das heisst, bis keine Gewichtszunahme mehr festgestellt werden kann. Je nach Foliendicke schwankt die dafür benötigte Zeit zwischen etwa 10 und 60 Tagen.

In Tabelle 1 sind Zusammensetzung und Eigenschaften der Copolyamide angegeben.

Bei der Angabe der Zusammensetzung wird der Anteil an Salz aus Terephthalsäure bzw. Isophthalsäure und einem Diamin der Formel II oder III in Gewichtsprozent aufgeführt, bezogen auf das Gesamtgewicht aller Einsatzkomponenten. Die Differenz zu 100 Gewichtsprozent besteht aus einem äquimolaren Gemisch von 4,4'-Diamino-3,3'-dimethyldicyclohexylmethan und Isophthalsäure, sofern nichts anderes vermerkt ist.

Die reduzierte Viskosität $\eta$ red. = $\eta$ rel. – 1/c basiert auf Messungen einer 0,5 %igen Lösung der Copolyamide in m-Kresol bei 25 °C. Die Glasumwandlungstemperaturen wurden im Differentialkalorimeter (DSC) gemessen. Bei den Werten für die Wasseraufnahme handelt es sich um Sättigungswerte bei Raumtemperatur. Die Beständigkeit der Transparenz gegenüber kochendem Wasser ist bei allen Copolyamiden sehr gut, das heisst, auch nach mehreren Tagen ist keine Beeinträchtigung der Transparenz feststellbar.

Tabelle 1

| Beispiel Nr. | Salzzusatz | Gew.% | $\eta$ red. dl/g | Glasumwandlungstemperatur °C | Wasseraufnahme 65% relat. Luftf. Gew.% | Kochwasserbeständigkeit |
|---|---|---|---|---|---|---|
| 2 | Salz B | 62 | 1,02 | 172 | 1,9 | sehr gut |
| 3 | Salz B | 70 | 1,09 | 162 | 1,7 | sehr gut |
| 4 1) | Salz B | 66 | 1,21 | 171 | 1,8 | sehr gut |
| 5 | Salz F | 53 | 0,88 | 172 | 1,7 | sehr gut |
| 6 | Salz F | 57 | 0,97 | 167 | 1,6 | sehr gut |
| 7 | Salz F | 62 | 0,95 | 159 | 1,4 | sehr gut |
| 8 | Salz H | 50 | 0,91 | 166 | 1,6 | sehr gut |
| 9 | Salz A | 60 | 1,10 | 166 | 1,8 | sehr gut |
| 10 | Salz D | 66 | 0,82 | 162 | 1,6 | sehr gut |
| 11 | Salz C | 74 | 1,05 | 160 | 1,5 | sehr gut |
| 12 | Salz K | 68 | 0,78 | 172 | 1,3 | sehr gut |
| 13 | Salz K | 70 | 1,09 | 166 | 1,2 | sehr gut |
| 14 | Salz E | 71 | 0,92 | 172 | 1,4 | sehr gut |
| 15 | Salz G | 65 | 0,87 | 159 | 1,4 | sehr gut |
| 16 | Salz L | 68 | 0,88 | 158 | 1,2 | sehr gut |
| 17 | Salz M | 68 | 0,98 | 168 | 1,3 | sehr gut |
| 18 | Salz I | 52 | 0,85 | 161 | 1,5 | sehr gut |
| 19 | Salz N | 65 | 1,02 | 156 | 1,2 | sehr gut |
| 20 | Salz O | 60 | 0,72 | 158 | 1,2 | sehr gut |
| 21 | Salz P | 65 | 0,81 | 163 | 1,5 | sehr gut |
| 22 | Salz Q | 65 | 0,87 | 145 | 1,4 | sehr gut |
| 23 | Salz R | 63 | 0,67 | 160 | 1,4 | sehr gut |
| 24 | Salz B 2) | 66 | 1,57 | 167 | 1,6 | sehr gut |
| 25 | Salz B 2) | 70 | 1,07 | 164 | 1,5 | sehr gut |
| 26 | Salz B 2 | 75 | 0,92 | 156 | 1,3 | sehr gut |

1) Die dem 4,4'-Diamino-3,3'-dimethyldicyclohexylmethan äquivalente Menge Säure besteht in diesem Beispiel aus einem 1 : 1-Gemisch von Iso- und Terephthalsäure.

2) Die dem 4,4'-Diamino-3,3'-dimethyldicyclohexylmethan äquivalente Menge Dicarbonsäure besteht in diesen Fällen nur aus Terephthalsäure.

In allen andern Fällen besteht die dem 4,4'-Diamino-3,3'-dimethyldicyclohexylamin äquivalente Menge Säure aus Isophthalsäure.

Beispiel 27

3,506 g 1,1,10,10-Tetramethyl-1,11-diaminoundecan,
4,585 g Terephthalsäurediphenylester,
2,431 g 4,4'-Diamino-3,3'-dimethyldicyclohexylmethan und
3,245 g Isophthalsäurediphenylester

werden in ein Glasgefäss eingeschmolzen und unter Stickstoff 16 Stunden lang auf 210° erhitzt.

Dann wird der Inhalt in ein offenes Kondensationsgefäss übergeführt und unter Stickstoff zuerst zwei Stunden lang unter Normaldruck bei 270 °C und dann unter Vakuum 2 Stunden lang polykondensiert. Das resultierende Polyamid hat folgende physikalische Eigenschaften :

η red : 0,76 dl/g (0,5 % m-Kresol) ; Tg : 148 °C ;
Wasseraufnahme : 1,6 Gew.% bei 65 % relativer Luftfeuchtigkeit.
Kochwasserbeständigkeit : sehr gut.

Beispiel 28

2,729 g 1-Pentamethylen-10,10-dimethyl-1,11-diaminoundecan,
3,056 g Terephthalsäurediphenylester,
1,21 g 4,4'-Diamino-3,3'-dimethyldicyclohexylmethan und
1,615 g Isophthalsäurediphenylester

werden unter gleichen Bedingungen wie in Beispiel 27 beschrieben zu einem Polyamid kondensiert. Das erhaltene Polyamid hat folgende Eingenschaften

η red : 0,82 dl/g (0,5 % m-Kresol) ; Tg : 168 °C ;
Wasseraufnahme : 1,2 Gew.% bei 65 % relativer Luftfeuchtigkeit ;
Kochwasserbeständigkeit ; sehr gut.

Beispiel 29

2,639 g 2,2-Bis-(4-aminocyclohexyl) propan,
1,837 g Isophthalsäure und
10,439 g Salz B

werden unter den in Beispiel 2 beschriebenen Bedingungen zu einem Polyamid kondensiert, mit dem Unterschied dass die Vorkondensation bei 300 °C durchgeführt wird. Das erhaltene Polyamid weist die folgenden Eigenschaften auf :

η red : 0,79 dl/g (0,5 % m-Kresol) ; Tg 158 °C ;
Wasseraufnahme : 1,8 Gew.% bei 65 % relativer Luftfeuchtigkeit ;
Kochwasserbeständigkeit : sehr gut.

Beispiel 30

In einen Autoklaven werden 2,078 kg l-Isopropyl-10,10-dimethyl-1,11-diaminoundecan, 1,067 kg 4,4'-Diamino-3,3'-dimethyldicyclohexylmethan, 1,355 kg Terephthalsäure, 0,843 kg Isophthalsäure und 0,026 kg Di-tert-butyl-p-kresol eingewogen. Nach dem Verdrängen der Luft aus dem Autoklaven durch mehrmaliges Evakuieren und Füllen mit $N_2$ wird der Autoklav verschlossen, und die Heizung wird auf 260 °C gestellt. Nach 1,5 Stunden ist eine Produkttemperatur von 245 °C erreicht, und es hat sich ein Druck von 2 bis 3 bar aufgebaut. Nun wird das Rührwerk in Gang gesetzt. Durch die einsetzende Kondensationsreaktion tritt eine lebhafte Wasserentwicklung ein, und der Druck steigt innerhalb von etwa 15 Minuten auf 8-9 bar. Eine Stunde lang wird der Druck auf dieser Höhe konstant gehalten, indem über ein Ventil von Zeit zu Zeit Wasserdampf abgelassen wird. Dann wird innerhalb von 30 Minuten auf Normaldruck entspannt und 5 Stunden lang unter leichtem Stickstoffstrom gerührt. Die Temperatur wird dabei so geregelt, dass die Produkttemperatur 280 °C nicht übersteigt. Um die Schmelze zu entgasen, wird der Autoklav noch für 15 Minuten unter Vakuum gesetzt. Nun wird das Rührwerk ausgeschaltet, die Produkttemperatur wird auf 290 °C gebracht, und die Schmelze wird mit einem Ueberdruck von 4 bar $N_2$ durch das Bodenventil ausgepresst und direkt granuliert. Das erhaltene Polyamid weist die folgenden Eigenschaften auf :

η red : 0,98 dl/g (0,5 % m-Kresol) ; Tg 170 °C ;
Wasseraufnahme : 1,8 Gew.% bei 65 % relativer Luftfeuchtigkeit.

Die in den obigen Beispielen verwendeten Diamine der Formel II und III können wie folgt hergestellt werden :

Herstellungsmethode A

1-Isopropyl-10,10-dimethyl-1,11-diaminoudecan

Unter Schutzgas (Argon) werden 2,57 g (0,01 Mol) Nikkelacetylacetonat und 1,66 g (0,01 Mol) Triäthylphosphit in 120 g absolutem Toluol gelöst, worauf man die Lösung bei 20-25 °C mit 1,3-Butadien sättigt. Anschliessend werden unter schwachem Einleiten von 1,3-Butadien langsam 3,9 g (0,03 Mol) Aethoxy-diäthylaluminium zugetropft. Es wird auf 60 °C aufgeheizt, und unter starkem Einleiten von 1,3-Butadien werden innerhalb von 45 Minuten 122,5 g (0,98 Mol) N-Isobutyliden-2-methylpropenylamin [hergestellt durch Umsetzung von Isobutyraldehyd mit Ammoniak gemäss J. Org. Chem., *26*, 1822-25 (1961)] so zugetropft, dass das eingeleitete Butadien gerade verbraucht wird. Nach beendetem Zutropfen wird noch 1 Stunde unter stetigem Einleiten von 1,3-Butadien bei 60 °C nachgerührt und dann auf 20-25 °C gekühlt. Der Katalysator wird durch Zugabe von 0,32 g (0,01 Mol) Schwefel inaktiviert, und die Reaktionslösung wird destilliert. Nach der anschliessenden Feindestillation erhält man 212,5 g (0,912 Mol) 3,3-Dimethyl-12-isopropyl-1-aza-1,5,9-cyclododecatrien ; Sdp. 54-55 °C/1,33 Pa ; $n_D^{20}$ = 1,483 2.

233,4 g (1 Mol) 3,3-Dimethyl-12-isopropyl-1-aza-1,5,9-cyclododecatrien werden innerhalb von 1 Stunde so zu 100 g 37 %iger Salzsäure und 200 ml Wasser getropft, dass die Temperatur nicht über 80 °C ansteigt. Dann wird auf 20-25 °C abgekühlt und mit 69,5 g (1,0 Mol) Hydroxylaminhydrochlorid versetzt. Während einer Stunde werden unter Kühlung mit einem Wasserbad ca. 92 g (2,3 Mol) festes Natriumhydroxid zugegeben, bis der pH-Wert der wässrigen Lösung 10-11 beträgt. Die sich abscheidende organische Phase wird abgetrennt und mit Wasser salzfrei gewaschen. Nach der Destillation erhält man 245 g (0,92 Mol) 2,2-Dimethyl-11-isopropyl-11-amino-undeca-4,8-dienal-oxim ; Sdp. 158-162 °C/4 Pa ; $n_D^{20}$ = 1,493 0.

490 g (1,84 Mol) 2,2-Dimethyl-11-isopropyl-11-amino-undeca-4,8-dienal-oxim werden in 2,4 Liter Methanol gelöst und zusammen mit ca. 200 g flüssigem Ammoniak unter Zugabe von 150 g Raney-Nickel in einen 6,3-Liter Stahlautoklaven eingefüllt. Es wird anschliessend Wasserstoff bis zu einem Druck von 100 bar aufgepresst und unter Rühren auf 100 °C aufgeheizt. Man hydriert ca. 5 Stunden unter diesen Bedingungen, kühlt ab und lässt dann den Ammoniak und überschüssigen Wasserstoff abblasen. Bei der anschliessenden Destillation im Hochvakuum erhält man 436 g (1,705 Mol) 1-Isopropyl-10,10-dimethyl-1,11-diaminoundecan als farblose, wasserklare Flüssigkeit ; Sdp. 87 °C/4 Pa ; $n_D^{20}$ = 1,461 9.

1-Aethyl-10,10-dimethyl-1,11-diaminoundecan

Umsetzung von N-Propyliden-(2-methylpropenylamin) [hergestellt durch Isomerisierung von Isobutyliden-allylamin in Gegenwart von Kalium-tert-butylat ; Sdp. 122 °C ; $n_D^{20}$ = 1,471] mit 1,3-Butadien zum 3,3-Dimethyl-12-äthyl-1-aza-1,5,9-cyclododecatrien ; Sdp. 65-66 °C/0,7 Pa ; $n_D^{20}$ = 1,486 4.

Umsetzung des 3,3-Dimethyl-12-äthyl-1-aza-1,5,9-cyclododecatriens mit Hydroxylaminsulfat in Gegenwart von Schwefelsäure zum 2,2-Dimethyl-11-äthyl-11-amino-undeca-4,8-dienal-oxim und Hydrierung des letzteren zum 1-Aethyl-10,10-dimethyl-1,11-diaminoundecan ; Sdp. 93 °C/7 Pa ; $n_D^{20}$ = 1,462 2.

1-Phenyl-10,10-dimethyl-1,11-diaminoundecan

Umsetzung von N-Benzyliden-(2-methylpropenylamin) [hergestellt durch Umsetzung von Benzaldehyd mit Methallylamin und anschliessende Isomerisierung in Gegenwart von Kalium-tert-butylat ; Sdp. 65-66 °C/7 Pa ; $n_D^{20}$ = 1,583 6] mit 1,3-Butadien zum 3,3-Dimethyl-12-phenyl-1-aza-1,5,9-cyclododecatrien ; Sdp. 128-130 °C/4 Pa ; Smp. 66-68 °C.

Umsetzung des 3,3-Dimethyl-12-phenyl-1-aza-1,5,9-cyclododecatriens mit Hydroxylaminsulfat in Gegenwart von Salzsäure und Wasser zum 2,2-Dimethyl-11-phenyl-11-amino-undeca-4,8-dienal-oxim und Hydrierung des letzteren zum 1-Phenyl-10,10-dimethyl-1,11-diaminoundecan ; Sdp. 150 °C/3 Pa ; $n_D^{20}$ = 1,505 4.

1-Phenyl-10-methyl-1,11-diaminoundecan

Umsetzung von N-Benzyliden-propenylamin mit 1,3-Butadien zum 3-Methyl-12-phenyl-1-aza-1,5,9-cyclododecatrien (cis/trans-Isomerengemisch 65 : 35) ; Sdp. 112-113 °C/1 Pa ; $n_D^{20}$ = 1,550 5.

Umsetzung des 3-Methyl-12-phenyl-1-aza-1,5,9-cyclododecatriens mit Hydroxylaminhydrochlorid in Gegenwart von Salzsäure und Wasser zum 2-Methyl-11-phenyl-11-amino-undeca-4,8-dienal-oxim und Hydrierung des letzteren zum 1-Phenyl-10-methyl-1,11-diaminoundecan ; Sdp. 138-140 °C/1 Pa ; $n_D^{20}$ = 1,509 5.

1-Cyclohexyl-10,10-dimethyl-1,11-diaminoundecan

Hydrierung von 1-Phenyl-10,10-dimethyl-1,11-diaminoundecan in Gegenwart eines Ruthenium/Kohle-Katalysators ; Sdp. 147 °C/4 Pa ; $n_D^{20}$ = 1,480 5.

1-Phenyl-10,10-diäthyl-1,11-diaminoundecan

Umsetzung von 1-Phenyl-4,4-diäthyl-2-aza-1,3-butadien [hergestellt durch Umsetzung von Benzylamin mit 2-Aethyl-butenal und anschliessende Isomerisierung in Gegenwart von Kalium-tert-butylat ; Sdp. 70 °C/7 Pa ; $n_D^{20}$ = 1,559 8 ; vgl. J. Org. Chem., *43*, N° 4, 782-84 (1978)] mit 1,3-Butadien zum 3,3-Diäthyl-12-phenyl-1-aza-1,5,9-cyclododecatrien ; Sdp. 105 °C/4 Pa ; $n_D^{20}$ = 1,536 9.

Umsetzung des 3,3-Diäthyl-12-phenyl-1-aza-1,5,9-cyclododecatriens mit Hydroxylaminhydrochlorid in Gegenwart von Salzsäure und Wasser zum 2,2-Diäthyl-11-phenyl-11-amino-undeca-4,8-dienal-oxim und Hydrierung des letzteren zum 1-Phenyl-10,10-diäthyl-1,11-diaminoundecan ; Sdp. 146 °C/2 Pa ; $n_D^{20}$ = 1,509 0.

1-Phenyl-10-äthyl-10-n-butyl-1,11-diaminoundecan

Umsetzung von 1-Phenyl-4-äthyl-4-n-butyl-2-aza-1,3-butadien [hergestellt durch Umsetzung von Benzylamin mit 2-Aethyl-hexenal und anschliessende Isomerisierung in Gegenwart von Kalium-tert-butylat ; Sdp. 90 °C/7 Pa ; $n_D^{20}$ = 1,563 0] mit 1,3-Butadien zum 3-Aethyl-3-n-butyl-12-phenyl-1-aza-1,5,9-cyclododecatrien ; Sdp. 130 °C/2 Pa ; $n_D^{20}$ = 1,529 6.

Umsetzung des 3-Aethyl-3-n-butyl-12-phenyl-1-aza-1,5,9-cyclododecatriens mit Hydroxylaminhydrochlorid in Gegenwart von Salzsäure und Wasser zum 2-Aethyl-2-n-butyl-11-phenyl-11-amino-undeca-4,8-dienal-oxim und Hydrierung des letzteren zum 1-Phenyl-10-äthyl-10-n-butyl-1-1,11-diaminoundecan ; Sdp. 155-158 °C/5 Pa ; $n_D^{20}$ = 1,504 5.

1-Pentamethylen-10,10-dimethyle-1,11-diaminoundecan

Umsetzung von N-Cyclohexyliden-(2-methylpropenylamin) [hergestellt durch Umsetzung von Cyclohexanon mit Methallylamin und anschliessende Isomerisierung in Gegenwart von Kalium-tert-butylat ; Sdp. 96 °C/1 700 Pa ; $n_D^{20}$ = 1,516 0]) mit 1,3-Butadien zum 3,3-Dimethyl-12-pentamethylen-1-aza-1,5,9-cyclododecatrien ; Sdp. 96 °C/4 Pa ; $n_D^{20}$ = 1,511 6.

Umsetzung des 3,3-Dimethyl-12-pentamethylen-1-aza-1,5,9-cyclododecatriens mit Hydroxylaminhydrochlorid in Gegenwart von Salzsäure und Wasser zum 2,2-Dimethyl-11-pentamethylen-11-amino-undeca-4,8-dienal-oxim und Hydrierung des letzteren zum 1-Pentamethylen-10,10-dimethyl-1,11-diaminoundecan ; Sdp. 112 °C/4 Pa ; $n_D^{20}$ = 1,483 3.

1-(3-Pentyl)-10-methyl-1,11-diaminoundecan

Umsetzung von N-(2-Aethyl)-buten-2-yliden-propenylamin [hergestellt durch Umsetzung von 2-Aethyl-butenal mit Allylamin und anschliessende Isomerisierung analog Zhurnal Organicheskoi Khimii, *6*, N° 11. 2 197-9 (1970) ; Sdp. 70 °C/1 700 Pa ; $n_D^{20}$ = 1,522 7] mit 1,3-Butadien zum 3-Methyl-12-(3-penten-2-yl)-1-aza-1,5,9-cyclododecatrien ; Sdp. 100 °C/4 Pa ; $n_D^{20}$ = 1,505 6.

Umsetzung des 3-Methyl-12-(3-penten-2-yl)-1-aza-1,5,9-cyclododecatriens mit Hydroxylaminsulfat in Gegenwart von Salzsäure und Wasser zum 2-Methyl-11-(3-penten-2-yl)-11-amino-undeca-4,8-dienal-oxim und Hydrierung des letzteren zum 1-(3-Pentyl)-10-methyl-1,11-diaminoundecan ; Sdp. 115 °C/5 Pa ; $n_D^{20}$ = 1,466 2.

1-n-Hexyl-10,10-dimethyl-1,11-diaminoundecan

Umsetzung von 1-n-Hexyl-4,4-dimethyl-2-aza-1,3-butadien [hergestellt durch Umsetzung von Heptanal mit Methallylamin und anschliessende Isomerisierung in Gegenwart von Kalium-tert-butylat ; Sdp. 54 °C/5 Pa ; $n_D^{20}$ = 1,466 2] mit 1,3-Butadien zum 3,3-Dimethyl-12-n-hexyl-1-aza-1,5,9-cyclododecatrien ; Sdp. 100 °C/4 Pa ; $n_D^{20}$ = 1,484 1.

Umsetzung des 3,3-Dimethyl-12-n-hexyl-1-aza-1,5,9-cyclododecatriens mit Hydroxylaminsulfat in Gegenwart von Salzsäure und Wasser zum 2,2-Dimethyl-11-n-hexyl-11-amino-undeca-4,8-dienal-oxim und Hydrierung des letzteren zum 1-n-Hexyl-10,10-dimethyl-1,10-diaminoundecan ; Sdp. 135 °C/4 Pa ; $n_D^{20}$ = 1,462 4.

1-(3-Pentyl)-3(4),7(8),10-trimethyl-1,11-diaminoundecan

Umsetzung von N-(2-Aethyl)-buten-2-yliden-propenylamin mit Isopren zum 3,5(6),9(10)-Trimethyl-12-(3-penten-2-yl)-1-aza-1,5,9-cyclododecatrien ; Sdp. 108-110 °C/5 Pa ; $n_D^{20}$ = 1,507 8.

Umsetzung des genannten 1-Aza-1,5,9-cyclododecatriens mit Hydroxylaminsulfat in Gegenwart von Salzsäure und Wasser zum 2,4(5),8(9)-Trimethyl-11-(3-penten-2-yl)-11-amino-undeca-4,8-dienyl-oxim und Hydrierung des letzteren zum 1-(3-Pentyl-3(4),7(8),10-trimethyl-1,11-diaminoundecan ; Sdp. 117 °C/2 Pa ; $n_D^{20}$ = 1,473 1.

1,1,10,10-Tetramethyl-1,11-diaminoundecan

Umsetzung von N-Isopropyliden-(2-methylpropenylamin) [hergestellt durch Umsetzung von Aceton mit Methallylamin und anschliessende Isomerisierung des Reaktionsprodukts ; Sdp. 89-90 °C ;

$n_D^{20}$ = 1,476 2] mit 1,3-Butadien zum 3,3,12,12-Tetramethyl-1-aza-1,5,9-cyclododecatrien ; Sdp. 58 °C/4 Pa ; $n_D^{20}$ = 1,485 8.

Umsetzung des 3,3,12,12-Tetramethyl-1,11-diaminoundecans mit Hydroxylaminsulfat in Gegenwart von Salzsäure und Wasser zum 2,2,11,11-Tetramethyl-11-amino-undeca-4,8-dienal-oxim und Hydrierung des letzteren zum 1,1,10,10-Tetramethyl-1,11-diaminoundecan ; Sdp. 92 °C/5 Pa ; $n_D^{20}$ = 1,459 0.

Herstellungsmethode B

1-Isopropyl-10,10-dimethyl-1,11-diaminoundecan

466,8 g (2 Mol) 3,3-Dimethyl-12-isopropyl-1-aza-1,5,9-cyclododecatrien werden in 4 Liter Cyclohexan gelöst und bei 20-25 °C und einem Anfangsdruck von 100 bar in Gegenwart von 80 g Rhodium/Aluminiumoxid während 4 Stunden in einem Stahlautoklaven hydriert. Nach dem Abdestillieren des Lösungsmittels erhält man als Hauptfraktion 425 g (1,79 Mol) 3,3-Dimethyl-12-isopropyl-1-aza-cyclododecen ; Sdp. 92-94 °C/4 Pa ; $n_D^{20}$ = 1,470 6.

Umsetzung des 3,3-Dimethyl-12-isopropyl-1-aza-cyclododecens mit Hydroxylaminhydrochlorid in Gegenwart von Salzsäure und Wasser zum 2,2-Dimethyl-11-isopropyl-11-amino-undecanal-oxim ; Sdp. 145 °C/4 Pa ; $n_D^{20}$ = 1,476 1.

Hydrierung des 2,2-Dimethyl-11-isopropyl-11-amino-undecanal-oxims analog der unter A) beschriebenen Methode zum 1-Isopropyl-10,10-dimethyl-1,11-diaminoundecan.

1,10-Diäthyl-10-n-butyl-1,11-diaminoundecan.

Umsetzung von N-Propyliden-(2-äthyl-hexen-1-yl-amin) [hergestellt durch Isomerisierung von (2-Aethyl-hexyliden)-allylamin in Gegenwart von Kalium-tert-butylat ; Sdp. 53-56 °C/133 Pa ; $n_D^{20}$ = 1,469 8] mit 1,3-Butadien zum 3,12-Diäthyl-3-n-butyl-1-aza-1,5,9-cyclododecatrien (Isomerengemisch) Sdp. 98-100 °C/40 Pa ; $n_D^{20}$ = 1,490 5, und Hydrierung zum 3-n-Butyl-3,12-diäthyl-1-aza-cyclododecen ; Sdp. 110 °C/7 Pa.

Umsetzung des 3-n-Butyl-3,12-diäthyl-1-aza-cyclododecens mit Hydroxylaminsulfat in Gegenwart von Salzsäure und Wasser zum 2-n-Butyl-2,11-diäthyl-11-amino-undecanal-oxim und Hydrierung des letzteren zum 1,10-Diäthyl-10-n-butyl-1,11-diaminoundecan ; Sdp. 128-130 °C/5 Pa ; $n_D^{20}$ = 1,463 0.

1-(3-Pentyl)-10,10-diäthyl-1,11-diaminoundecan

Umsetzung von 1-(3-Pentyl)-4,4-diäthyl-2-aza-1,3-butadien [hergestellt durch Umsetzung von 2-Aethylbutyraldehyd mit Ammoniak gemäss US Patentschrift 2.319.848] mit 1,3-Butadien zum 3,3-Diäthyl-12-(3-pentyl)-1-aza-1,5,9-cyclododecatrien (Sdp. 90-92 °C/0,13 Pa ; $n_D^{20}$ = 1,484 0) und Hydrierung zum 3,3-Diäthyl-12-(3-pentyl)-1-aza-cyclododecen ; Sdp. 95 °C/4 Pa.

Umsetzung des 3,3-Diäthyl-12-(3-pentyl)-1-aza-cyclododecens mit Hydroxylaminsulfat in Gegenwart von Salzsäure und Wasser zum 2,2-Diäthyl-11-(3-pentyl)-11-amino-undecanal-oxim ($n_D^{20}$ = 1,463 7), und Hydrierung des letzteren zum 1-(3-Pentyl)-10,10-diäthyl-1,11-diaminoundecan ; Sdp. 133-135 °C/3 Pa ; $n_D^{20}$ = 1,470 4.

1-(2-Pentyl)-10-methyl-10-n-propyl-1,11-diaminoundecan

Umsetzung von N-2-Methyl-pentyliden-(2-methyl-penten-1-yl-amin) [hergestellt durch Umsetzung von 2-Methylvaleraldehyd mit Ammoniak gemäss US Patentschrift 2.319.848] mit 1,3-Butadien zum 3-Methyl-3-n-propyl-12-(2-pentyl)-1-aza-1,5,9-cyclododecatrien (Isomerengemisch ; Sdp. 103-105 °C/40 Pa ; $n_D^{20}$ = 1,488 6) und Hydrierung zum 3-Methyl-3-n-propyl-12-(2-pentyl)-1-aza-cyclododecen ; Sdp. 125 °C/53 Pa.

Umsetzung des 3-Methyl-3-n-propyl-12-(2-pentyl)-1-aza-cyclododecens mit Hydroxylaminsulfat in Gegenwart von Salzsäure und Wasser zum 2-Methyl-2-n-propyl-11-(2-pentyl)-11-amino-undecanal-oxim und Hydrierung des letzteren zum 1-(2-Pentyl)-10-methyl-10-n-propyl-1,11-diaminoundecan ; Sdp. 140-142 °C/3 Pa ; $n_D^{20}$ = 1,466 5.

1-(3-Heptyl)-10-n-butyl-10-äthyl-1,11-diaminoundecan

Umsetzung von N-2-Aethyl-hexyliden-(2-äthylhexen-1-yl-amin) [hergestellt durch Umsetzung von 2-Aethylcapronaldehyd mit Ammoniak] mit 1,3-Butadien zum 3-Aethyl-3-n-butyl-12-(3-heptyl)-1-aza-1,5,9-cyclododecatrien (7 : 3 Isomerengemisch ; Sdp. 106-109 °C/13 Pa ; $n_D^{20}$ = 1,489 5) und Hydrierung zum 3-n-Butyl-3-äthyl-12-(3-heptyl)-1-aza-cyclododecen ; Sdp. 130 °C/4 Pa.

Umsetzung des 3-n-Butyl-3-äthyl-12-(3-heptyl)-1-aza-cyclododecens mit Hydroxylaminsulfat in Gegenwart von Salzsäure und Wasser zum 2-n-Butyl-2-äthyl-11-(3-heptyl)-11-amino-undecanal-oxim und Hydrierung des letzteren zum 1-(3-Heptyl)-10-n-butyl-10-äthyl-1,11-diaminoundecan ; Sdp. 156-160 °C/4 Pa ; $n_D^{20}$ = 1,467 2.

1-Cyclohexyl-10-pentamethylen-1,11-diaminoundecan

Umsetzung von N-Cyclohexylmethyliden-(cyclohexylidenmethylamin) [hergestellt durch Umsetzung von Cyclohexanaldehyd mit Ammoniak ; Sdp. 83 °C/4 Pa ; $n_D^{20}$ = 1,526 0] mit 1,3-Butadien zum 3-Pentamethylen-12-cyclohexyl-1-aza-1,5,9-cyclododecatrien (Sdp. 140 °C/3 Pa ; $n_D^{20}$ = 1,519 1) und Hydrierung des 3-Pentamethylen-12-cyclohexyl-1-aza-1,5,9-cyclododecatriens zum 3-Pentamethylen-12-cyclohexyl-1-aza-cyclododecen ; Sdp. 140-142 °C/3 Pa ; $n_D^{20}$ = 1,498 2.

Umsetzung des 3-Pentamethylen-12-cyclohexyl-1-aza-cyclododecens mit Hydroxylaminhydrochlorid zum 2-Pentamethylen-11-cyclohexyl-11-amino-undecanal-oxim und Hydrierung des letzteren zum 1-Cyclohexyl-10-pentamethylen-1,11-diaminoundecan ; Sdp. 166-170 °C/3 Pa ; $n_D^{20}$ = 1,497 5.

1-Cyclopentyl-10-tetramethylen-1,11-diaminoundecan

Umsetzung von N-Cyclopentylmethyliden-(cyclopentyliden-methylamin) [Herstellung analog US Patentschrift 2.319.848 ; Sdp. 125 °C/1,86 × $10^3$ Pa ; $n_D^{20}$ = 1,524 5] mit 1,3-Butadien zum 3-Tetramethylen-12-cyclopentyl-1-aza-1,5,9-cyclododecatrien (Sdp. 120 °C/1 Pa) und Hydrierung des 3-Tetramethylen-12-cyclopentyl-1-aza-1,5,9-cyclododecatriens zum 3-Tetramethylen-12-cyclopentyl-1-aza-cyclododecen ; Sdp. 130 °C/7 Pa.

Umsetzung des 3-Tetramethylen-12-cyclopentyl-1-aza-cyclododecens mit Hydroxylaminsulfat zum 2-Tetramethylen-11-cyclopentyl-11-amino-undecanal-oxim und Hydrierung des letzteren zum 1-Cyclopentyl-10-tetramethylen-1,10-diamino-undecan ; Sdp. 166-168 °C/5 Pa ; $n_D^{20}$ = 1,492 2.

**Ansprüche**

1. Ein transparentes Copolyamid mit einer reduzierten spezifischen Viskosität von mindestens 0,5 dl/g, gemessen an einer 0,5 %igen Lösung in m-Kresol bei 25 °C, das durch Umsetzung eines Gemisches A) aus stöchiometrischen Mengen eines Diamins der Formel I

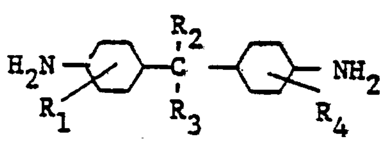

(I)

und Isophthalsäure, Terephthalsäure, amidbildenden Derivaten davon oder einem Gemisch von Isophthalsäure und Terephthalsäure bzw. amidbildenden Derivaten davon entweder mit einem Gemisch B) aus stöchiometrischen Mengen eines Diamins der Formel II

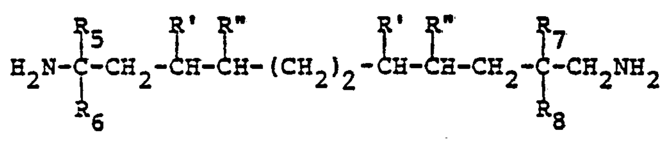

(II)

und Terephthalsäure bzw. einem amidbildenden Derivat davon oder einem Gemisch von Terephthalsäure und Isophthalsäure bzw. amidbildenden Derivaten davon in einem Molverhältnis Terephthalsäure (derivat) : Isophthalsäure (derivat) von 8 : 2 bis 10 : 0 oder mit einem Gemisch C) aus stöchiometrischen Mengen eines Diamins der Formel III

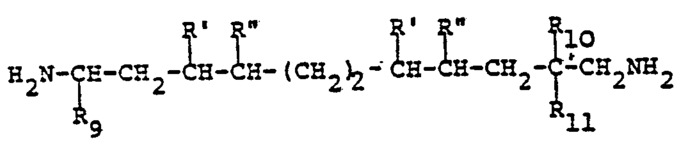

(III)

und Terephthalsäure oder Isophthalsäure bzw. Gemischen oder amidbildenden Derivaten davon erhalten wird, worin

R' und R'' unabhängig voneinander Wasserstoff oder Methyl,

$R_1$ bis $R_4$ unabhängig voneinander Wasserstoff oder Alkyl mit 1-4 C-Atomen,

$R_5$ Alkyl mit 1-12 C-Atomen oder gegebenenfalls substituiertes Aryl,

$R_6$ Wasserstoff oder Alkyl mit 1-6 C-Atomen oder
$R_5$ und $R_6$ zusammen Alkylen mit 4-7 C-Atomen,
$R_7$ Alkyl mit 1-8 C-Atomen,
$R_8$ Wasserstoff oder Alkyl mit 1-5 C-Atomen,
$R_9$ gegebenenfalls durch $C_{1-4}$-Alkyl substituiertes Cycloalkyl mit 5-12 Ring-C-Atomen,
$R_{10}$, Wasserstoff oder Methyl und
$R_{11}$ Methyl oder
$R_{10}$ und $R_{11}$ zusammen Alkylen mit 4-11 C-Atomen bedeuten, wobei der Anteil an Gemisch C) 60-80 Gewichtsprozent und der Anteil an Gemisch B) 50-80 Gewichtsprozent betragen, mit der Massgabe, dass bei einem Anteil an Gemisch B) von bis zu 65 Gewichtsprozent höchstens 70 Mol.% der Isophthalsäure oder eines amidbildenden Derivats davon im Gemisch A durch Terephthalsäure oder ein amidbildendes Derivat davon ersetzt sein können und sich diese Gewichtsprozente bei amidbildenden Derivaten der Isophthalsäure oder Terephthalsäure auf gleiche funktionelle Gruppen beziehen.

2. Ein transparentes Copolyamid nach Anspruch 1, das durch Umsetzung eines Gemisches A) aus stöchiometrischen Mengen eines Diamins der Formel I und Isophthalsäure, Terephthalsäure oder einem Gemisch von Isophthalsäure und Terephthalsäure bzw. amidbildenden Derivaten davon mit einem Gemisch B) aus stöchiometrischen Mengen eines Diamins der Formel II und Terephthalsäure bzw. einem amidbildenden Derivat davon erhalten wird, wobei R' und R" je Wasserstoff, $R_1$ bis $R_4$ unabhängig voneinander Wasserstoff oder Methyl, $R_5$ Phenyl, geradkettiges Alkyl mit 1-6 C-Atomen oder —$CH(R_{12})(R_{13})$, $R_6$ Wasserstoff oder Methyl, $R_7$ und $R_{13}$ unabhängig voneinander Alkyl mit 1-6 C-Atomen und $R_8$ und $R_{12}$ unabhängig voneinander Alkyl mit 1-4 C-Atomen bedeutet, der Anteil an Gemisch B) 50-75 Gewichtsprozent beträgt und sich diese Gewichtsprozente bei amidbildenden Derivaten der Iso- oder Terephthalsäure auf gleiche funktionelle Gruppen beziehen.

3. Ein transparentes Copolyamid nach Anspruch 2, worin R' und R" je Wasserstoff, $R_1$ und $R_4$ je Methyl, $R_2$ und $R_3$ je Wasserstoff, $R_6$ Wasserstoff, $R_5$ —$CH(R_{12})(R_{13})$ und $R_7$ und $R_{13}$ bzw. $R_8$ und $R_{12}$ je Methyl, Aethyl, n-Propyl oder n-Butyl bedeuten und der Anteil an Gemisch B) 50-70 Gewichtsprozent beträgt.

4. Ein transparentes Copolyamid nach Anspruch 1, das durch Umsetzen eines Gemisches A) aus stöchiometrischen Mengen eines Diamins der Formel I und Isophthalsäure bzw. einem amidbildenden Derivat davon mit einem Gemisch C) aus stöchiometrischen Mengen eines Diamins der Formel III und Terephthalsäure bzw. einem amidbildenden Derivat davon erhalten wird, worin R' und R" je Wasserstoff, $R_1$ bis $R_4$ unabhängig voneinander Wasserstoff oder Methyl, $R_9$ Cycloalkyl mit 5-8 Ring-C-Atomen und $R_{10}$ und $R_{11}$ je Methyl oder zusammen Alkylen mit 4-7 C-Atomen bedeuten, der Anteil an Gemisch C) 65-75 Gewichtsprozent beträgt und sich diese Gewichtsprozente bei amidbildenden Derivaten der Iso- oder Terephthalsäure auf gleiche funktionelle Gruppen beziehen.

5. Ein transparentes Copolyamid nach Anspruch 4, worin R' und R" je Wasserstoff, $R_1$ und $R_4$ je Methyl, $R_2$ und $R_3$ je Wasserstoff, $R_9$ Cyclopentyl und $R_{10}$ und $R_{11}$ zusammen Tetramethylen oder $R_9$ Cyclohexyl und $R_{10}$ und $R_{11}$ zusammen Pentamethylen bedeuten und der Anteil an Gemisch C) 65-75 Gewichtsprozent beträgt.

6. Ein transparentes Copolyamid nach Anspruch 1, das durch Umsetzen eines Gemisches A) aus stöchiometrischen Mengen eines Diamins der Formel Ia

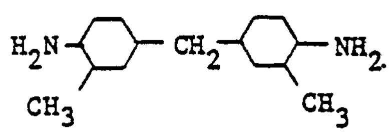

(Ia)

und Isophthalsäure, Terephthalsäure oder amidbildenden Derivaten davon oder einem Gemisch von Isophthalsäure und Terephthalsäure bzw. amidbildenden Derivaten davon in einem Molverhältnis Isophthalsäure (derivat) : Terephthalsäure (derivat) von 5 : 5 mit einem Gemisch B) aus stöchiometrischen Mengen eines Diamins der Formel IIa

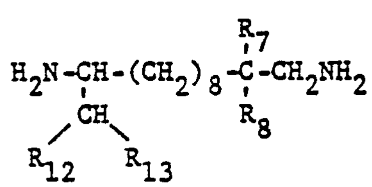

(IIa)

worin $R_7$, $R_8$, $R_{12}$ und $R_{13}$ je Methyl oder Aethyl bedeuten, und Terephthalsäure bzw. einem amidbildenden Derivat davon erhalten wird, wobei der Anteil an Gemisch B) bei $R_7$, $R_8$, $R_{12}$, $R_{13}$ = Methyl 60-75 Gewichtsprozent und bei $R_7$, $R_8$, $R_{12}$, $R_{13}$ = Aethyl 50-65 Gewichtsprozent beträgt und sich diese Gewichtsprozente bei amidbildenden Derivaten der Iso- oder Terephthalsäure auf gleiche funktionelle Gruppen beziehen.

7. Verwendung eines Copolyamids nach Anspruch 1 zur Herstellung von Formkörpern.

**Claims**

1. A transparent copolyamide having a reduced specific viscosity of at least 0.5 dl/g, measured on a 0.5 % solution in m-cresol at 25 °C, which copolyamide is obtained by reaction of a mixture A) consisting of stoichiometric amounts of a diamine of the formula I

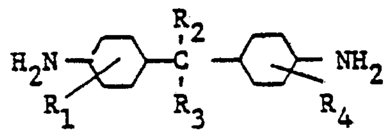 (I)

and isophthalic acid or terephthalic acid, or amide-forming derivatives thereof, or a mixture of isophthalic acid and terephthalic acid, or amide-forming derivatives thereof, either with a mixture B) consisting of stoichiometric amounts of a diamine of the formula II

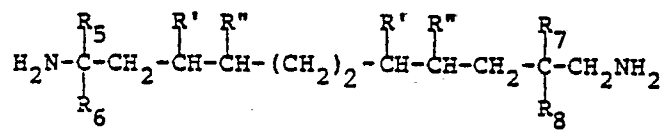 (II)

and terephthalic acid or an amide-forming derivative thereof, or a mixture of terephthalic acid and isophthalic acid, or amide-forming derivatives thereof, in a molar ratio of terephthalic acid (derivative) : isophthalic acid (derivative) of 8 : 2 to 10 : 0, or with a mixture C) consisting of stoichiometric amounts of a diamine of the formula III

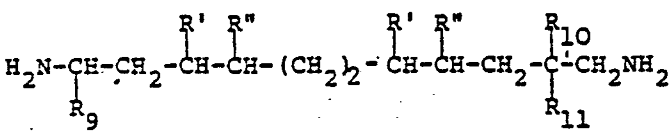 (III)

and terephthalic acid or isophthalic acid, or mixtures or amide-forming derivatives thereof, wherein
R′ and R″ independently of one another are each hydrogen or methyl;
$R_1$ to $R_4$ independently of one another are each hydrogen or alkyl having 1-4 C atoms,
$R_5$ is alkyl having 1-12 C atoms, or unsubstituted or substituted aryl,
$R_6$ is hydrogen or alkyl having 1-6 C atoms, or
$R_5$ and $R_6$ together are alkylene having 4-7 C atoms,
$R_7$ is alkyl having 1-8 C atoms,
$R_8$ is hydrogen or alkyl having 1-5 C atoms,
$R_9$ is cycloalkyl which has 5-12 ring C atoms and which is unsubstituted or substituted by $C_{1-4}$-alkyl,
$R_{10}$ is hydrogen or methyl, and
$R_{11}$ is methyl, or
$R_{10}$ and $R_{11}$ together are alkylene having 4-11 C atoms, the proportion of mixture C) being 60-80 per cent by weight and that of mixture B) being 50-80 per cent by weight, with the proviso that with a proportion of mixture B) of up to 65 per cent by weight, at most 70 mol.% of isophthalic acid, or of an amide-forming derivative thereof, in mixture A) can be replaced by terephthalic acid or by an amide-forming derivative thereof, these weight percentages in the case of amide-forming derivatives of isophthalic acid or of terephthalic acid relating to identical functional groups.

2. A transparent copolyamide according to Claim 1, which is obtained by reaction of a mixture A) consisting of stoichiometric amounts of a diamine of the formula I and isophthalic acid or terephthalic acid or a mixture of isophthalic acid and terephthalic acid, or amide-forming derivatives thereof, with a mixture B) consisting of stoichiometric amounts of a diamine of the formula II and terephthalic acid or an amide-forming derivative thereof, wherein R′ and R″ are each hydrogen, $R_1$ to $R_4$ independently of one another are hydrogen or methyl, $R_5$ is phenyl, straight-chain alkyl having 1-6 C atoms or $-CH(R_{12})(R_{13})$, $R_6$ is hydrogen or methyl, $R_7$ and $R_{13}$ independently of one another are each alkyl having 1-6 C atoms, and $R_8$ and $R_{12}$ independently of one another are each alkyl having 1-4 C atoms, the proportion of mixture B) being 50-75 per cent by weight, these weight percentages in the case of amide-forming derivatives of iso- or terephthalic acid relating to identical functional groups.

3. A transparent copolyamide according to Claim 2, wherein R′ and R″ are each hydrogen, $R_1$ and $R_4$ are each methyl, $R_2$ and $R_3$ are each hydrogen, $R_6$ is hydrogen, $R_5$ is $-CH(R_{12})(R_{13})$, and $R_7$ and $R_{13}$ and $R_8$ and $R_{12}$ are each methyl, ethyl, n-propyl or n-butyl, and the proportion of mixture B) is 50-70 per cent by weight.

4. A transparent copolyamide according to Claim 1, which is obtained by reaction of a mixture A) consisting of stoichiometric amounts of a diamine of the formula I and isophthalic acid or an amide-forming derivative thereof with a mixture C) consisting of stoichiometric amounts of a diamine of the formula III and terephthalic acid or an amide-forming derivative thereof, wherein R′ and R″ are each hydrogen, $R_1$ to $R_4$ independently of one another are each hydrogen or methyl, $R_9$ is cycloalkyl having 5-8 ring C atoms, and $R_{10}$ and $R_{11}$ are each methyl or together are alkylene having 4-7 C atoms, the proportion of mixture C) being 65-75 per cent by weight, these weight percentages in the case of amide-forming derivatives of iso- or terephthalic acid relating to identical functional groups.

5. A transparent copolyamide according to Claim 4, wherein R′ and R″ are each hydrogen, $R_1$ and $R_4$ are each methyl, $R_2$ and $R_3$ are each hydrogen, $R_9$ is cyclopentyl, and $R_{10}$ and $R_{11}$ together are tetramethylene, or $R_9$ is cyclohexyl, and $R_{10}$ and $R_{11}$ together are pentamethylene, and the proportion of mixture C) is 65-75 per cent by weight.

6. A transparent copolyamide according to Claim 1, which is obtained by reaction of a mixture A) consisting of stoichiometric amounts of a diamine of the formula Ia

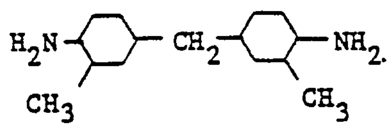

(Ia)

and isophthalic acid or terephthalic acid, or amide-forming derivatives thereof, or a mixture of isophthalic acid and terephthalic acid, or amide-forming derivatives thereof, in a molar ratio of isophthalic acid (derivative) : terephthalic acid (derivative) of 5 : 5, with a mixture B) consisting of stoichiometric amounts of a diamine of the formula IIa

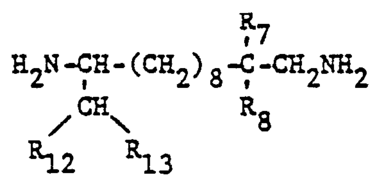

(IIa)

wherein $R_7$, $R_8$, $R_{12}$ and $R_{13}$ are each methyl or ethyl, and terephthalic acid or an amide-forming derivative thereof, the proportion of mixture B) where $R_7$, $R_8$, $R_{12}$ and $R_{13}$ are each methyl being 60-75 per cent by weight, and where $R_7$, $R_8$, $R_{12}$ and $R_{13}$ are each ethyl being 50-65 per cent by weight, these weight percentages in the case of amide-forming derivatives of iso- or terephthalic acid relating to identical functional groups.

7. Use of a copolyamide according to Claim 1 for producing moulded articles.

**Revendications**

1. Copolyamide transparent ayant une viscosité spécifique réduite d'au moins 0,5 dl/g, mesurée sur une solution à 0,5 % dans du m-crésol à 25 °C, qui est obtenu par réaction d'un mélange A) constitué de quantités stœchiométriques d'une diamine de formule I

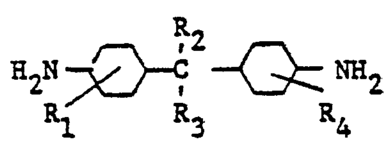

(I)

et d'acide isophtalique, d'acide téréphtalique, de dérivés amidogènes de ceux-ci ou d'un mélange d'acide isophtalique et d'acide téréphtalique ou de dérivés amidogènes de ceux-ci, soit avec un mélange B) constitué de quantités stœchiométriques d'une diamine de formule II

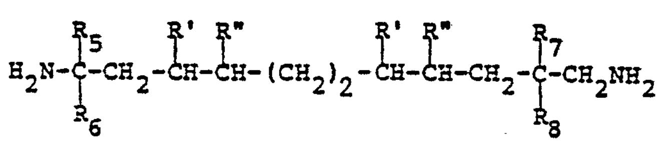

(II)

et d'acide téréphtalique ou d'un dérivé amidogène de celui-ci ou d'un mélange d'acide téréphtalique et d'acide isophtalique ou de dérivés amidogènes de ceux-ci dans un rapport molaire de l'acide

téréphtalique (ou de son dérivé) à l'acide isophtalique (ou à son dérivé) compris entre 8 : 2 et 10 : 0, soit avec un mélange C) constitué de quantités stœchiométriques d'une diamine de formule III

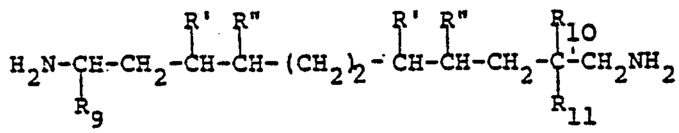

(III)

et d'acide téréphtalique ou d'acide isophtalique ou de mélanges ou de dérivés amidogènes de ceux-ci, formules dans lesquelles

R' et R'' représentent chacun, indépendamment l'un de l'autre, l'hydrogène ou un méthyle,

$R_1$ à $R_4$ représentent chacun, indépendamment les uns des autres, l'hydrogène ou un alkyle en $C_1$-$C_4$,

$R_5$ représente un alkyle en $C_1$-$C_{12}$ ou un aryle éventuellement substitué,

$R_6$ représente l'hydrogène ou un alkyle en $C_1$-$C_6$ ou

$R_5$ et $R_6$ forment ensemble un alkylène en $C_4$-$C_7$,

$R_7$ représente un alkyle en $C_1$-$C_8$,

$R_8$ représente l'hydrogène ou un alkyle en $C_1$-$C_5$,

$R_9$ représente un cycloalkyle qui contient de 5 à 12 atomes de carbone dans son cycle et qui porte éventuellement un alkyle en $C_1$-$C_4$,

$R_{10}$ représente l'hydrogène ou un méthyle et

$R_{11}$ représente un méthyle ou

$R_{10}$ et $R_{11}$ forment ensemble un alkylène en $C_4$-$C_{11}$, la proportion du mélange C) étant de 60 à 80 % en poids et la proportion du mélange B) de 50 à 80 % en poids, avec la condition que, dans le cas où la proportion du mélange B) ne dépasse pas 65 % en poids, au plus 70 % en mole de l'acide isophtalique ou d'un dérivé amidogène de celui-ci puissent être remplacés, dans le mélange A), par de l'acide téréphtalique ou un dérivé amidogène de celui-ci, ces pourcentages pondéraux concernant, dans le cas de dérivés amidogènes de l'acide isophtalique ou de l'acide téréphtalique, des groupes fonctionnels identiques.

2. Copolyamide transparent selon la revendication 1 obtenu par réaction d'un mélange A) constitué de quantités stœchiométriques d'une diamine de formule I et d'acide isophtalique, d'acide téréphtalique ou d'un mélange d'acide isophtalique et d'acide téréphtalique ou de dérivés amidogènes de ceux-ci, avec un mélange B) constitué de quantités stœchiométriques d'une diamine de formule II et d'acide téréphtalique ou d'un dérivé amidogène de celui-ci, les divers symboles présents dans les formules I et II ayant les significations suivantes : R' et R'' représentent chacun l'hydrogène, $R_1$ à $R_4$ représentent chacun, indépendamment les uns des autres, l'hydrogène ou un méthyle, $R_5$ représente un phényle, un alkyle linéaire en $C_1$-$C_6$ ou un radical —$CH(R_{12})(R_{13})$, $R_6$ représente l'hydrogène ou un méthyle, $R_7$ et $R_{13}$ représentent chacun, indépendamment l'un de l'autre, un alkyle en $C_1$-$C_6$ et $R_8$ et $R_{12}$ représentent chacun, indépendamment l'un de l'autre, un alkyle en $C_1$-$C_4$, la proportion du mélange B) étant de 50 à 75 % en poids et ces pourcentages pondéraux concernant, dans le cas de dérivés amidogènes de l'acide isophtalique ou de l'acide téréphtalique, des groupes fonctionnels identiques.

3. Copolyamide transparent selon la revendication 2, caractérisé en ce que R' et R'' représentent chacun l'hydrogène, $R_1$ et $R_4$ chacun un méthyle, $R_2$ et $R_3$ chacun l'hydrogène, $R_6$ représente l'hydrogène, $R_5$ un radical —$CH(R_{12})(R_{13})$ et $R_7$ et $R_{13}$, ou $R_8$ et $R_{12}$, représentent chacun un méthyle, un éthyle, un n-propyle ou un n-butyle, la proportion du mélange B) étant de 50 à 70 % en poids.

4. Copolyamide transparent selon la revendication 1, qui a été obtenu par réaction d'un mélange A) constitué de quantités stœchiométriques d'une diamine de formule I et d'acide isophtalique ou d'un dérivé amidogène de celui-ci, avec un mélange C) constitué de quantités stœchiométriques d'une diamine de formule III et d'acide téréphtalique ou d'un dérivé amidogène de celui-ci, les divers symboles présents dans les formules I et III ayant les significations suivantes : R' et R'' représentent chacun l'hydrogène, $R_1$ à $R_4$ représentent chacun, indépendamment les uns des autres, l'hydrogène ou un méthyle, $R_9$ représente un cycloalkyle contenant de 5 à 8 atomes de carbone dans son cycle et $R_{10}$ et $R_{11}$ représentent chacun un méthyle ou forment ensemble un alkylène contenant de 4 à 7 atomes de carbone, la proportion du mélange C) étant de 65 à 75 % en poids et ces pourcentages pondéraux concernant, dans le cas de dérivés amidogènes de l'acide isophtalique ou de l'acide téréphtalique, des groupes fonctionnels identiques.

5. Copolyamide transparent selon la revendication 4, dans lequel R' et R'' représentent chacun l'hydrogène, $R_1$ et $R_4$ chacun un méthyle, $R_2$ et $R_3$ chacun l'hydrogène, $R_9$ représente un cyclopentyle et $R_{10}$ et $R_{11}$ forment ensemble un radical tétraméthylène, ou $R_9$ représente un cyclohexyle et $R_{10}$ et $R_{11}$ forment ensemble un radical pentaméthylène, et la proportion du mélange C) est de 65 à 75 % en poids.

6. Copolyamide transparent selon la revendication 1, qui est obtenu par réaction d'un mélange A) constitué de quantités stœchiométriques d'une diamine de formule Ia

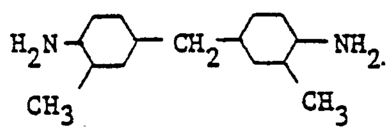

(Ia)

et d'acide isophtalique, d'acide téréphtalique ou de dérivés amidogènes de ceux-ci ou d'un mélange d'acide isophtalique et d'acide téréphtalique ou de dérivés amidogènes de ceux-ci dans un rapport molaire de l'acide isophtalique (ou de son dérivé) à l'acide téraphtalique (ou à son dérivé) égal à 5 : 5, avec un mélange B) constitué de quantités stœchiométriques d'une diamine répondant à la formule IIa

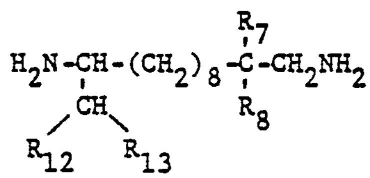

(IIa)

dans laquelle $R_7$, $R_8$, $R_{12}$ et $R_{13}$ représentent chacun un méthyle ou un éthyle, et d'acide téréphtalique ou d'un dérivé amidogène de celui-ci, la proportion du mélange B) étant de 60 à 75 % en poids lorsque $R_7$, $R_8$, $R_{12}$ et $R_{13}$ représentent chacun un méthyle et de 50 à 65 % en poids lorsque $R_7$, $R_8$, $R_{12}$ et $R_{13}$ représentent chacun un éthyle, ces pourcentages pondéraux étant relatifs, dans le cas de dérivés amidogènes de l'acide isophtalique ou de l'acide téréphtalique, à des groupes fonctionnels identiques.

7. Application d'un copolyamide selon la revendication 1 pour la fabrication d'objets moulés.